(19) Europäisches Patentamt
European Patent Office
Office européen des brevets

(11) Numéro de publication : 0 286 551 B1

# (12) FASCICULE DE BREVET EUROPEEN

(45) Date de publication du fascicule du brevet : **29.05.91 Bulletin 91/22**

(51) Int. Cl.[5] : **C08L 23/16**, C08L 83/04

(21) Numéro de dépôt : **88420098.1**

(22) Date de dépôt : **24.03.88**

## (54) Compositions de caoutchouc EPDM et/ou EPR et de silicones.

(30) Priorité : **30.03.87 FR 8704591**

(43) Date de publication de la demande : **12.10.88 Bulletin 88/41**

(45) Mention de la délivrance du brevet : **29.05.91 Bulletin 91/22**

(84) Etats contractants désignés : **AT BE CH DE ES FR GB GR IT LI LU NL SE**

(56) Documents cités :
**EP-A- 0 040 468**
**GB-A- 2 019 417**
**US-A- 4 376 184**
**PATENT ABSTRACTS OF JAPAN, vol. 5, no. 194 (C-82)[866], 10 décembre 1981**

(73) Titulaire : **COMPAGNIE DE RAFFINAGE ET DE DISTRIBUTION TOTAL FRANCE**
**84, rue de Villiers**
**F-92300 Levallois Perret (FR)**
Titulaire : **RHONE-POULENC CHIMIE**
**25, quai Paul Doumer**
**F-92408 Courbevoie Cédex (FR)**

(72) Inventeur : **Lemoine, Guy**
**81, rue Louis Delamare**
**F-76600 Le Havre (FR)**
Inventeur : **Lucas, Robert**
**29, rue Boris Vian**
**F-76290 Montivilliers (FR)**
Inventeur : **Soria, Meyer**
**142, rue Dedieu**
**F-69100 Villeurbanne (FR)**

(74) Mandataire : **Seugnet, Jean Louis et al**
**RHONE-POULENC INTERSERVICES Service Brevets Chimie Centre de Recherches des Carrières B.P. 62**
**F-69192 Saint-Fons Cédex (FR)**

EP 0 286 551 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des compositions contenant du caoutchouc EPDM (terpolymère éthylène-propylène-diène), et/ou du caoutchouc EPR copolymère éthylène-propylène, et de silicones.

Les compositions du type ci-dessus sont connues depuis longtemps. Elles ont été développées dans le but d'obtenir un caoutchouc ayant à la fois les bonnes propriétés mécaniques des caoutchoucs organiques et la bonne tenue thermique des silicones. Cet ensemble de propriétés est en effet nécessaire pour un nombre croissant d'applications parmi lesquelles on peut citer l'isolation électrique et l'industrie automobile.

Les agents réticulants couramment utilisés sont les dérivés soufrés et/ou un péroxyde organique.

Comme document illustrant cet art antérieur, dans le cas où l'agent réticulant est essentiellement un péroxyde organique on peut citer :

– le brevet US-A-3 227 777 décrivant l'association EPR-huile + gomme organopolysiloxane vinylée réticulant au péroxyde,

– le brevet US-A-3 865 897 décrivant une méthode de mélangeage par cisaillement à température élevée du caoutchouc organique et de la silicone en vue d'améliorer la compatibilité des deux constituants,

– les brevets US-A-4 234 702 (correspondant GB-A-2 019 417) et EP-A-40 468 enseignant que pour améliorer cette compatibilité on peut ajouter une huile diorganopolysiloxane dont certains groupes organiques sont notamment choisis parmi les radicaux alkyle ayant de 4 à 20 atomes de carbone, les radicaux hydroxyalkyle et les radicaux polyoxyalkylène,

– la demande de brevet japonais KOKAI 81-116 739 ayant pour objet une composition formée de :

. 100 parties d'un caoutchouc EPR ou EPDM,
. 1 à 150 parties d'une gomme organopolysiloxane,
. 10 à 150 parties de silice de surface spécifique supérieure à 50 $m^2/g$,
. 0,5 à 15 parties de mercapto-2 benzimidazole,
. 0,5 à 15 parties d'un antioxydant phénolique,
. 0,1 à 10 parties d'un péroxyde organique.

Les compositions décrites dans les documents ci-dessus constituent certes un progrès par rapport à l'utilisation de caoutchoucs organiques seuls ou de silicones seules mais il est encore nécessaire d'apporter des améliorations, en particulier pour les applications de l'industrie automobile (fabrication de divers objets notamment de durites et de courroies).

On constate en effet que les compositions connues présentent en particulier une mauvaise tenue au vieillissement à chaud ayant notamment pour conséquence l'apparition de craquelures et une diminution importante de l'allongement à la rupture.

Un but de la présente invention est de proposer une composition qui combine à la fois d'une part les bonnes propriétés de mise en oeuvre et les propriétés mécaniques des EPDM et/ou EPR et, d'autre part, la bonne tenue thermique des silicones.

Un autre but de la présente invention est de proposer une composition du type ci-dessus qui présente une bonne tenue à la vapeur d'eau et la facilité de mise en oeuvre des EPDM et/ou EPR en particulier une bonne consistance à l'état cru ("green strength") qui est une caractéristique essentielle pour la fabrication et la manipulation des articles manufacturés comme par exemple les durites pour automobile.

Un autre but de la présente invention est de proposer une composition du type ci-dessus qui présente la bonne tenue thermique des caoutchoucs silicones.

Un autre but de la présente invention est de proposer une composition du type ci-dessus qui présente une bonne résistance thermique obtenue par l'utilisation simultanée d'un système de protection thermique et d'un système compatibilisant adaptés.

Ces but et d'autres sont atteints par la présente invention qui concerne en effet composition de caoutchouc à propriétés améliorées comportant :

(A) 100 parties d'un mélange de :

($A_1$) 95 à 30 parties d'un polymère choisi parmi un terpolymère éthylène-propylène-diène et un copolymère éthylène-propylène,

($A_2$) 5 à 70 parties d'une gomme diorganopolysiloxane de viscosité d'au moins $10^6$ mPa.s à 25 °C,

(B) 0,5 à 10 parties d'un produit de formule :

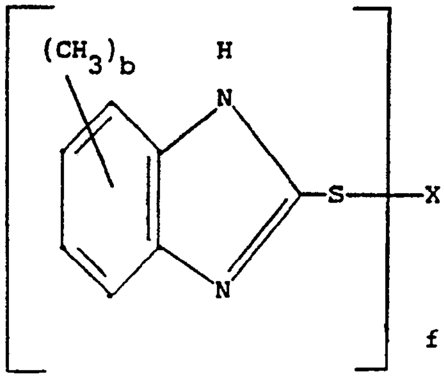

(1)

dans laquelle b = 0 ou 1, X est choisi parmi un cation métallique et l'atome d'hydrogène, f est un nombre entier compris entre 1 et 3 inclus égal au nombre de charges positives portées par le cation ; f étant égal à 1 quand X est l'atome d'hydrogène. Parmi les cations métalliques on peut citer l'aluminium, le tellure, le nickel et le zinc. Le zinc est le cation préféré et dans ce cas f = 2.

(C) 0,1 à 10 parties d'un composé aromatique à fonction amine secondaire.

(D) 5 à 200 parties d'une charge minérale.

(E) 0,1 à 30 parties d'une huile diorganopolysiloxane de viscosité comprise entre 10 et 5000 mPa.s à 25°C, dont les radicaux organiques sont choisis parmi les radicaux méthyle, vinyle, phényle et 3,3,3-trifluoropropyle, au moins 50% molaire de radicaux organiques étant des radicaux méthyle.

(F) 0,1 à 7 parties d'un péroxyde organique.

Le constituant ($A_1$) est bien connu et est disponible dans le commerce à l'état non vulcanisé. On peut utiliser l'EPDM ou l'EPR seul ou en mélange. En général le constituant ($A_1$) contient divers additifs connus tels que des charges de renforcement ou de bourrage, des plastifiants, des pigments, des retardateurs de propagation de la flamme. Toutefois les quantités de constituants ($A_1$) et ($A_2$) auxquelles on fait référence dans la présente description représentent les seuls polymères et n'incluent pas les additifs.

Comme exemples de diènes utilisés dans l'EPDM on peut citer le 5-méthylène 2-norbornène, 5-éthylidène 2-norbornène, le dicyclopentadiène, le cyclooctadiène et le 1,4 hexadiène.

La gomme diorganopolysiloxane ($A_2$) a pour formule générale : $R_{3-a}(R'O)_aSiO(R_2SiO)_nSi(OR')_aR_{3-a}$ dans laquelle les symboles R, identiques ou différents, représentent des radicaux hydrocarbonés en $C_1$-$C_8$, substitués ou non par des atomes d'halogène, des radicaux cyano ; le symbole R' représente un atome d'hydrogène, un radical alkyle en $C_1$-$C_4$, le symbole a représente zéro ou un, le symbole n représente un nombre ayant une valeur suffisante pour obtenir une viscosité d'au moins 1 million de mPa.s à 25°C, au moins 50% en nombre des radicaux représentés par R sont des radicaux méthyle et 0,005 à 0,5 mole % des motifs entrant dans la constitution de la gomme sont choisis parmi ceux de formules $(CH_2 = CH)(R)\,SiO$ et $(CH_2 = CH)R_{2-a}(R'O)_aSi_{0,5}$.

Le symbole R représente un radical hydrocarboné en $C_1$-$C_8$ substitué ou non par des atomes d'halogène, des radicaux cyano ; il englobe plus spécifiquement :

– des radicaux alkyle en $C_1$-$C_5$, substitués ou non par des atomes d'halogène, des radicaux cyano, tels que les radicaux méthyle, éthyle, propyle, isopropyle, butyle, isobutyle, pentyle, trifluoro-3,3,3 propyle, gamma-cyanoéthyle, gamma-cyanopropyle,

– des radicaux alcényle en $C_2$-$C_4$ tels que les radicaux vinyle, allyle, butène-2 yle, – des radicaux aryle mononucléaire en $C_6$-$C_8$, substitués ou non par des atomes d'halogène tels que les radicaux phényle, chlorophényle, tolyle, trifluorométhylphényle.

Les radicaux alkyle en $C_1$-$C_4$, représentés par le symbole R', concernent plus spécifiquement les radicaux méthyle, éthyle, propyle, isopropyle, butyle, butyle secondaire.

De préférence au moins 60% en nombre, en particulier au moins 70% des radicaux représentés par R sont des radicaux méthyle.

Par ailleurs des radicaux vinyle sont également présents, en quantité appropriée, dans la gomme ($A_2$) ; ils conduisent à des motifs de formules $CH_2 = CH(R)SiO$ et $(CH_2 = CH)R_{2-a}\,(R'O)_aSiO_{0,5}$ dont le nombre représente 0,005 à 0,5 mole %, de préférence 0,01 à 0,45 mole %, de l'ensemble des motifs de formules générales $R_2SiO$ et $R_{3-a}(RO)_aSi_{0,5}$, entrant dans la constitution de la gomme ($A_2$).

A titre d'exemples concrets de motifs constituant les gommes ($A_2$) peuvent être cités ceux de formules :

$(CH_3)_2SiO$,

$CH_3(CH_2{=}CH)SiO$,

$CH_3(C_6H_5)SiO$,

$(C_6H_5)_2SiO$,

$CH_3(C_2H_5)SiO$,

$CH_3(n.C_3H_7)SiO$,

$(CH_3)_3SiO_{0,5}$,

$(CH_3)_2CH_2{=}CHSiO_{0,5}$,

$CH_3(C_6H_5)_2SiO_{0,5}$,

$CH_3(C_6H_5)(CH_2{=}CH)SiO_{0,5}$,

$HO(CH_3)_2SiO_{0,5}$,

$CH_3O(CH_3)_2SiO_{0,5}$,

$C_2H_5O(CH_3)_2SiO_{0,5}$,

$n.C_3H_7O(CH_3)_2SiO_{0,5}$,

$HO(CH_2 = CH)(CH_3)SiO_{0,5}$.

Les gommes ($A_2$) sont commercialisées par les fabricants de silicones, d'autre part elles peuvent être aisément fabriquées en mettant en oeuvre des techniques abondamment décrites dans la littérature chimique.

Dans la majorité des cas, on utilise des gommes méthylvinyldiméthylpolysiloxanes possèdant le long de leur chaîne des motifs $(CH_3)_2SiO$ et $CH_2 = CH(CH_3)SiO$ et à l'extrémité de leur chaîne des motifs choisis parmi ceux de formules :

$(CH_3)_2(CH_2 = CH)SiO_{0,5}$ , $HO(CH_3)(CH_2 = CH)SiO_{0,5}$,

$(CH_3)_3SiO_{0,5}$ , $C_6H_5(CH_3)(CH_2 = CH)SiO_{0,5}$,

$HO(CH_3)_2SiO_{0,5}$

ou des gommes diméthylpolysiloxanes bloquées à chaque extrémité de leur chaîne par l'un des motifs précédents renfermant un radical vinyle.

Elles présentent généralement une viscosité d'au mois 2 millions de mPa.s à 25°C.

De préférence on utilise de 90 à 50 parties de ($A_1$) pour 10 à 50 parties de ($A_2$).

($A_2$) peut être directement ajouté à ($A_1$) ou être préalablement mélangé à (B) (C), (D) et (E) avant d'être mélangé à ($A_1$).

Le couple des produits (B) et (C) constitue le système de protection thermique de la composition de l'invention. Ce système confère à la composition une tenue thermique efficace.

Le produit (B) répondant à la formule (1) ci-dessus est un constituant essentiel de l'invention.

On utilise de préférence de 1 à 5 parties de (B) pour 100 parties de (A).

(C) est un composé aromatique à fonction amine secondaire jouant en outre le rôle d'antioxygène.

La fonction amine secondaire peut être inclue ou non dans un noyau hydrocarboné. Le composé C est de préférence un solide à température ordinaire et peut se présenter sous forme d'un polymère.

Comme exemples de composés (C) polymère on peut citer la 2,2,4-triméthyl 1,2-dihydroquinoléine polymérisée au moins en partie ($C_1$) de formule moyenne :

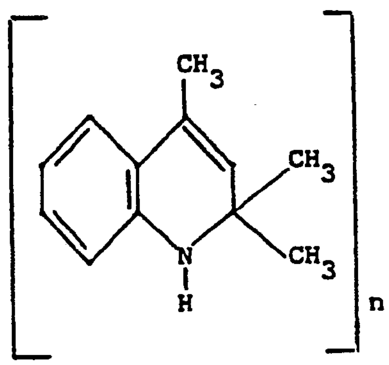

(2)

dans laquelle n est un nombre entier généralement compris entre 1 et 10 inclus.

Comme composé (C) ont peut également utiliser les para-phénylène diamines plus spécifiquement celles de formule :

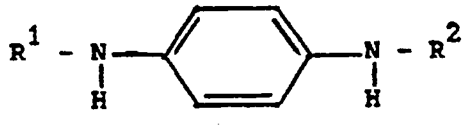

(3)

dans lesquelles les radicaux $R_1$ et $R_2$, identiques ou différents, sont choisis parmi des radicaux alkyle linéaires ou ramifiés en $C_1$-$C_{20}$ et des radicaux phényle, alkylphényl, ou phényl alkyle dont la partie alkyle est en $C_1$-$C_4$.

Comme exemples de composés répondant à la formule (3) on peut citer :

- la N,N' diphényl-para-phénylènediamine ($C_2$)

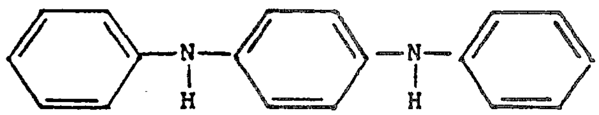

- la N-isopropyl-N'phényl-paraphenylenediamine ($C_3$)

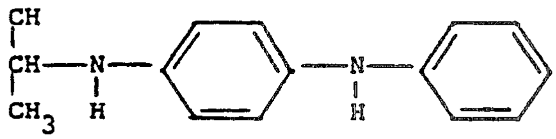

- N-(1,3 diméthylbutyl) N'-phényl-para-phénylènediamine ($C_4$)

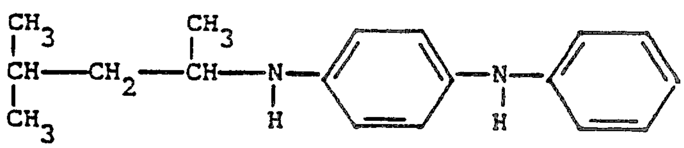

- la N,N' diisooctyl-para-phénylènediamine ($C_5$)

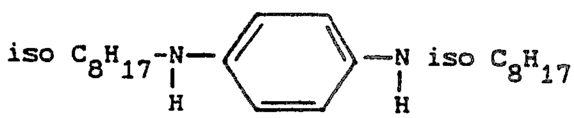

Le produit ($C_1$) est le produit préféré. On utilise de préférence de 0,1 à 5 parties de (C) pour 100 parties de (A).

Les charges minérales (D) sont introduites à raison de 5 à 200 parties, de préférence 7 à 150 parties, pour 100 parties du mélange (A).

Elles comprennent habituellement des charges renforçantes finement divisées et/ou des charges non renforçantes de tailles plus grossières.

Les charges renforçantes sont choisies de préférence parmi les silices de combustion et de précipitation. Ces silices ont une surface spécifique mesurée selon la méthode BET, d'au moins 50 $m^2/g$, de préférence supérieure à 70 $m^2/g$, une dimension moyenne des particules primaires inférieures à 80 nanomètres et une densité apparente inférieure à 200 g/litre.

Ces silices peuvent être incorporées telles quelles, ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20%, de préférence 18% environ.

Les charges non renforçantes sont constituées de charges minérales dont le diamètre particulaire moyen est supérieur à 100 nanomètres.

Ces charges sont représentées plus spécialement par le quartz broyé, les argiles calcinées, les silices de diatomées, le carbonate de calcium, les oxydes de zinc, de fer, de titane, de magnésium, d'aluminium, le noir de carbone, les silicates de magnésium, d'aluminium, les sulfates d'aluminium, de calcium, de barium, de l'amiante et des fibres de verre, de carbone et des fibres synthétiques, d'aramide, de polyester, de polyamide et de rayonne.

Pour 100 parties de mélange (A) on ajoute de 0,1 à 30 parties d'une huile diorganopolysiloxane (E) de viscosité comprise entre 10 et 5000, de préférence entre 50 et 1000, mPa.s à 25°C, dont les radicaux organiques sont choisis parmi les radicaux méthyle, vinyle, phényle et 3,3,3-trifluropropyle, au moins 50% des radicaux organiques étant des radicaux méthyle.

Plus spécifiquement l'huile (E) répond à la formule générale :

$$R^3_{3-g}(HO)_gSiO(R_2^3SiO)_mSi(OH)_gR^3_{3-g}$$

laquelle les radicaux $R^3$, identiques ou différents, sont choisis parmi les radicaux méthyle, vinyle, phényle et 3,3,3-trifluoropropyle, g est 0 ou 1 et m est un nombre entier ayant une valeur suffisante pour conférer au polymère (E) une viscosité comprise entre 10 et 5000 mPa.s à 25°C.

Sont plus particulièrement préférées les huiles (E) dont tous les radicaux R sont choisis parmi les radicaux méthyle et phényle en particulier les huiles diméthylpolysiloxanes bloquée triméthylsiloxy, les huiles (α-ωdihydroxy)diméthylpolysiloxane et les huiles (phénylméthyl)(diméthyl)polysiloxane bloquées triméthylsiloxy.

Les huiles (E) constituent le système compatibilisant des polymères ($A_1$) et ($A_2$) et contribuent également à la résistance thermique de la composition.

Les peroxydes organiques (F) sont utilisés à raison de 0,1 à 7 parties, de préférence 0,2 à 6 parties, pour 100 parties du mélange (A). Ils sont bien connus des techniciens de la fabrication des caoutchoucs et comprennent plus spécialement le peroxyde de benzoyle, le peroxyde de bis (2,4-dichloro benzoyle), le peroxyde de dicumyle, le perbenzoate de t-butyle, le peroxyde de di-t-butyle, le 2,5 bis(tert-butylperoxy)-2,5 diméthylhexane.

Ces divers peroxydes se décomposent à des températures et à des vitesses parfois différentes. Ils sont choisis en fonction des conditions de durcissement exigées.

Les compositions selon l'invention peuvent comporter en outre, de préférence au moins l'un des deux additifs (G) et (H) ci-dessous :

Pour 100 parties de mélange (A) on peut ajouter éventuellement de 0,05 à 5 parties d'un silane (G) de formule :

$$(CH_2 = CH)Si(CH_3)_c(X)_{3-c} \quad (4)$$

dans laquelle X est choisi parmi les radicaux méthoxy, éthoxy, 2-méthoxyéthoxy et 2-éthoxyéthoxy, c est 1 ou 0.

Comme exemples de silane (G) on peut citer : le méthylvinyldiéthoxysilane, le vinyltriméthoxysilane, le vinyltriéthoxysilane, le vinyltri(2-éthoxyéthoxy)silane, le vinyltri(2-méthoxyéthoxy)silane.

Pour 100 parties de mélange (A) on peut ajouter éventuellement de 0.05 à 5, de préférence de 0,1 à 2 parties d'un silane (H) de formule :

$$CH_2 = C(R^4)COO(CH_2)_dSi(Y)_e (X)_{3-e} \quad (5)$$

dans laquelle $R^4$ est H ou méthyle, d est un nombre entier compris entre 1 et 5 inclus, Y est un méthyle ou un phényle, X a la définition donnée à la formule (4) ci-dessus et e est 1 ou 0.

A titre d'exemples concrets de ces silanes (H) peuvent être cités ceux de formules :

$CH_2=CH-COOCH_2Si(OCH_3)_3$

$CH_2=CH-COOCH_2Si(OCH_2CH_2OCH_3)_2C_6H_5$

$CH_2=CH-COO(CH_2)_3Si(OC_2H_5)_3$

$CH_2=C(CH_3)COO(CH_2)_3Si(OCH_3)_3$

$CH_2=C(CH_3)COO(CH_2)_3SiCH_3(OCH_3)_2$

$CH_2=C(CH_3)COO(CH_2)_5Si(OCH_3)_3$

Selon un mode préféré de réalisation de l'invention, il a été trouvé en effet qu'il est possible d'améliorer le système compatibilisant constitué par les huiles (E) en ajoutant en outre dans la composition un silane (G) et/ou (H) pour accroître encore la compatibilité des polymères ($A_1$) et ($A_2$) et donc la résistance thermique de la composition.

Les compositions selon l'invention peuvent contenir des additifs usuels tels que des plastifiants organiques en particulier des acides gras et leurs dérivés, des dérivés de l'acide phtalique, des agents lubrifiants, des huiles paraffiniques, des agents porophores et des additifs anti UV.

Pour préparer les compositions de l'invention, diverses méthodes de mélangeage sont possibles, l'ordre d'introduction des différents constituants n'étant pas critiques mais il est toutefois souhaitable d'ajouter le constituant (F) en dernier.

Les compositions selon l'invention sont préparées de préférence suivant l'un des deux procédés ci-dessous :

Selon le premier procédé on prépare tout d'abord un mélange maître silicone en utilisant, de préférence un mélangeur Banbury, ou un pétrin pour mélanger les constituants ($A_2$), (D), (E) et éventuellement (G), (H), puis on ajoute le mélange maître silicone obtenu à ($A_1$) à l'aide, de préférence d'un mélangeur Banbury, ou d'un mélangeur à cylindres avec les constituants (B) et (C) et on introduit (F) en dernier.

Selon le deuxième procédé on prépare séparément d'une part un premier mélange-maître en mélangeant, de préférence dans un mélangeur Banbury, ($A_1$) au moins une partie de (D) et d'autre part un deuxième mélange-maître en mélangeant de préférence dans un pétrin, ($A_2$), le reste des charges (D), (E) et éventuellement (G) et (H).

On homogénéise de préférence sur un mélangeur à deux cylindres ces deux mélanges-maîtres en ajoutant (B) et (C) puis à la fin (F).

Bien entendu quand le constituant (F) est introduit, il faut prendre garde que la température de mélangeage soit inférieure à la température d'activation du peroxyde pour éviter un début prématuré de vulcanisation.

Les compositions selon l'invention sont vulcanisées à chaud de préférence sous pression, par exemple à une température de 100 à 200 °C, durant trois minutes à trois heures sous une pression comprise entre 2 et 20 MPa.

Les compositions selon l'invention conservent leurs propriétés mécaniques à température élevée et sont utilisables pour réaliser une large variété d'objets tels que des courroies, des rouleaux, des tubes et tuyaux, des durits, des joints, etc....

D'autres avantages et caractéristiques de l'invention apparaîtront à la lecture des exemples suivants de l'invention, donnés à titre illustratif.

Sauf indications contraires les parties et pourcentages sont en poids.

– <u>EXEMPLES COMPARATIFS 1 A 3 ET EXEMPLES 4 A 6</u> :

– Définition des constituants utilisés :

$(A)_1$ : EPDM commercialisé par la Société TOTAL CHIMIE sous la marque commerciale EP 657® à 6% d'éthylidène-5 norbornène-2 et 70% d'éthylène,

$(A)_2$ : – Gomme (diméthyl)(méthylvinyl)polysiloxane bloquée à chacune de ses extrémités par un motif triméthylsiloxy et comprenant dans sa chaîne 99,8% molaire de motif diméthylsiloxy et 0,2% molaire de motif méthylvinylsiloxy et de viscosité $10^7$ mpa.s à 25°C,

(B) :

$(B_1)$

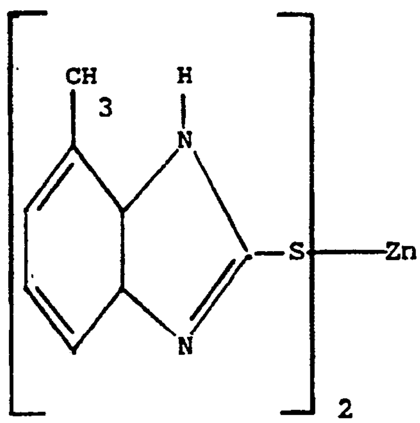

$(B_2)$

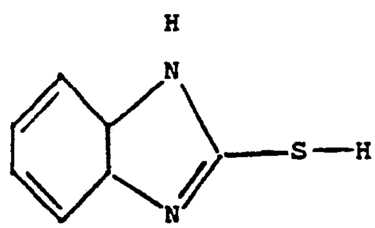

(C) :

$C_1$ : 2,2,4-triméthyl 1,2-dihydroquinoléine polymérisée commercialisée par la Société VULNAX sous la dénomination PERMANAX TQ,

$C_5$ : N,N' diisooctyl-para-phénylène diamine.

(D) :

$(D_1)$ : silice de pyrogénation de surface spécifique BET de 300 m²/g.

$(D_2)$ : silice de précipitation de surface spécifique BET de 175 m²/g.

$(D_3)$ : oxyde de zinc ZnO.

(E) : huile méthylphénylpolysiloxane bloquée triméthylsiloxy de viscosité 100 mPa.s à 25°C contenant 10% molaire de radicaux phényle.

(F) : péroxyde de dicumyle.

(G) : vinyltris(2-methoxyéthoxy)silane.

(H) : gamma-méthacryloxypropyltriméthoxysilane.

(P) : plastifiant : huile paraffinique.

– Mélange des constituants :

Préparation des mélanges-maîtres $MM_1$ et $MM_2$ :

$MM_1$ : dans un mélangeur Banbury on mélange les constituants $(A_1)$, $(D_2)$, $(D_3)$, (G) et (P),

$MM_2$ : dans un pétrin on mélange les constituants $(A_2)$, $(D_1)$, (E) et (H).

Sur le mélangeur à 2 cylindres on homogénéise les deux mélanges maîtres $MM_1$ et $MM_2$, on ajoute (B) et (C), puis on ajoute (F). La température au cours de cette opération de mélange ne dépasse pas 90°C.

La composition catalysée est pressée et vulcanisée 10 minutes à 170°C sous une pression de 15 MPa en vue d'obtenir des plaques de 2 mm d'épaisseur qui sont recuites en étuve ventilée pendant deux heures à 150°C.

A partir de ces plaques on réalise des éprouvettes normalisées sur lesquelles on mesure les propriétés suivantes :

– dureté SHORE A (DSA) selon la norme ASTMD-2240,

– résistance à la rupture (R/R) selon la norme AFNOR T 46 002 correspondant à la norme ASTMD 412 en MPa,

– allongement à la rupture (A/R) en % selon la norme précédente AFNOR + 46 002,

– la résistance à la déchirure (R/D) selon la norme ASTMD 624 en k N/m.

Un autre lot d'éprouvettes recuites pendant deux heures à 150°C est traité en étuve ventilée pendant 72 heures à 200°C et on mesure les mêmes propriétés mécaniques que ci-dessus, puis on calcule en % les variations des propriétés mécaniques par rapport aux valeurs obtenues à 150°C.

Les résultats sont rassemblés dans les tableaux 1 et 2 ci-après, le tableau 1 donnant la composition des échantillons des exemples 1 à 6 et le tableau 2 donnant les propriétés mécaniques.

TABLEAU 1

| Exemples | 1 | 2 | 3 | 4 | 5 | 6 |
|---|---|---|---|---|---|---|
| A1 | 70 | 70 | 70 | 70 | 80 | 80 |
| A2 | 30 | 30 | 30 | 30 | 20 | 20 |
| B1 | 0 | 1,8 | 2,5 | 1,8 | 0 | 2,5 |
| B2 | 0 | 0 | 0 | 0 | 2,5 | 0 |
| C1 | 0 | 0,5 | 0,5 | 0,5 | 0,5 | 0,5 |
| C5 | 0 | 0 | 0 | 0 | 1 | 1 |
| D1 | 7 | 7 | 7 | 7 | 5 | 5 |
| D2 | 30 | 30 | 30 | 30 | 50 | 50 |
| D3 | 3 | 3 | 3 | 3 | 3 | 3 |
| E | 0 | 0 | 0 | 6 | 6 | 6 |
| F | 1,5 | 1,5 | 1,5 | 1,5 | 1,5 | 1,5 |
| G | 1 | 1 | 1 | 1 | 1 | 1 |
| H | 0,2 | 0,2 | 0,2 | 0,2 | 0,1 | 0,1 |
| P | 20 | 20 | 20 | 20 | 25 | 25 |

TABLEAU 2

| Exemples | 1 | 2 | 3 | 4 | 5 | 6 |
|---|---|---|---|---|---|---|
| (DSA)<br>2 h (R/R)<br>à (A/R)<br>150 °C(R/D) | 66<br>10,0<br>400<br>26 | 65<br>11,0<br>600<br>32 | 66<br>10,0<br>550<br>30 | 62<br>8,3<br>610<br>33 | 69<br>12,9<br>490<br>40 | 69<br>11,4<br>440<br>43 |
| (DSA)<br>72 h (R/R)<br>à (A/R)<br>200 °C(R/D) | 88<br>2,2<br>25<br>10 | 78<br>3,2<br>50<br>12 | 78<br>5,0<br>100<br>14 | 63<br>8,4<br>475<br>33 | 74<br>8,0<br>252<br>25 | 73<br>10,8<br>262<br>26 |
| Δ DSA (%)<br>Δ R/R (%)<br>Δ A/R (%)<br>Δ R/D (%) | + 22<br>- 78<br>- 94<br>- 62 | + 13<br>- 70<br>- 91<br>- 62 | + 12<br>- 50<br>- 82<br>- 53 | + 1<br>- 2<br>- 22<br>- 0 | + 5<br>- 38<br>- 49<br>- 37 | + 4<br>- 5<br>- 40<br>- 40 |

L'exemple comparatif 1 illustre l'intérêt d'utiliser les additifs $B_1$, $C_1$ et E,
Les exemples comparatifs 2 et 3 démontrent la nécessité d'utiliser l'additif E.

- EXEMPLES COMPARATIFS 7, 8 ET 9 :

Dans ces exemples on part de la même composition que celle de l'exemple 6 sauf que l'on remplace le composé $C_1$ par une même quantité d'un antioxydant phénolique le 2,6-di-tert butyl paracrésol (exemple 7), le 2,2'-méthylène-bis(4-méthyl 6-tert butyl phénol) (exemple 8) et le bis 2,2'méthylène bis(4-méthyl 6-tert butyl phénol téréphtalate (exemple 9).

Il apparaît que les produits des exemples 7 à 9 vulcanisent correctement et donnent des propriétés mécaniques comparables à celles obtenues à l'exemple 6 après traitement thermique deux heures à 150°C.

Toutefois, après cuisson 240 heures 180°C les produits deviennent friables et cassants.

## Revendications

1. Composition de caoutchouc comportant :

(A) 100 parties d'un mélange de :

($A_1$) 95 à 30 parties d'un polymère choisi parmi un terpolymère éthylène-propylène-diène et un copolymère éthylène-propylène,

($A_2$) 5 à 70 parties d'une gomme diorganopolysiloxane de viscosité d'au moins $10^6$ mPa.s à 25°C,

(B) 0,5 à 10 parties d'un produit de formule :

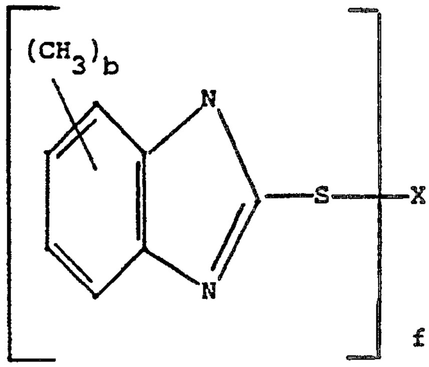

(1)

dans laquelle b = 0 ou 1, X est choisi parmi un cation métallique et l'atome d'hydrogène, f est un nombre entier compris entre 1 et 3 inclus et est égal au nombre de charges positives portées par le cation, et f = 1 si X est l'atome d'hydrogène.

(C) 0,1 à 10 parties d'un composé aromatique à fonction amine secondaire.

(D) 5 à 200 parties d'une charge minérale.

(E) 0,1 à 30 parties d'une huile diorganopolysiloxane de viscosité comprise entre 10 et 5000 mPa.s à 25°C, dont les radicaux organiques sont choisis parmi les radicaux méthyle, vinyle, phényle et 3,3,3-trifluoropropyle, au moins 50% molaire des radicaux organiques étant des radicaux méthyle.

(F) 0,1 à 7 parties d'un péroxyde organique.

2. Composition selon la revendication 1, caractérisée en ce que (C) est choisi parmi la 2,2,4-triméthyl 1,2-dihydroquinoléine au moins en partie polymérisée et les para-phénylène diamines.

3. Composition selon la revendication 1, caractérisée en ce que dans la formule (1) du produit B, X est le zinc et f = 2.

4. Composition selon l'une quelconque des revendications précédentes, caractérisée en ce que l'huile (E) répond à la formule générale :

$$R^3_{3-g}(HO)_gSiO(R_2^3SiO)_mSi(OH)_gR^3_{3-g}$$

dans laquelle les radicaux $R^3$, identiques ou différents, sont choisis parmi les radicaux méthyle, vinyle, phényle et 3,3,3-trifluoropropyle, g est 0 ou 1 et m est un nombre entier ayant une valeur suffisante pour conférer au polymère (E) une viscosité comprise entre 10 et 5000 mPa.s à 25°C.

5. Composition selon la revendication 4, caractérisée en ce que les radicaux $R^3$ sont choisis parmi les radicaux méthyle et phényle.

6. Composition selon l'une quelconque des revendications précédentes, caractérisée en ce qu'elle comporte en outre pour 100 parties de mélange (A) de 0,05 à 5, de préférence de 0.1 à 2 parties d'un silane (G) de formule :

$$(CH_2 = CH)Si(CH_3)_c(X)_{3-c} \quad (4)$$

dans laquelle X est choisi parmi les radicaux méthoxy, éthoxy, 2-méthoxyéthoxy et 2-éthoxyéthoxy, c est ou 0.

7. Composition selon l'une quelconque des revendications précédentes, caractérisée en ce qu'elle comporte en outre, pour 100 parties de mélange (A) de 0,05 à 5, de préférence de 0,1 à 2 parties d'un silane (H) de formule :

$$CH_2 = C(R^4)COO(CH_2)_dSi(Y)_e(X)_{3-e} \quad (5)$$

dans laquelle $R^4$ est H ou méthyle d est en nombre entier compris entre 1 et 5 inclus, Y est un méthyle ou un phényle, X a la définition donnée à la formule (4) ci-dessus et e est 1 ou 0.

8. Composition selon l'une quelconque des revendications 1 à 7, caractérisée en ce que la charge (D) est choisie parmi les silices de combustion et de précipitation.

9. Procédé de préparation d'une composition telle que définie à l'une quelconque des revendications 1 à 8 selon lequel on prépare séparément d'une part un premier mélange-maître en mélangeant ($A_1$) au moins une partie de (D) et d'autre part un deuxième mélange-maître en mélangeant ($A_2$), le reste des charges (D) et (E) et éventuellement (G) et (H), puis on homogénéise les deux mélanges-maîtres en ajoutant (B) et (C) puis à la fin (F).

## Ansprüche

1. Kautschukzusammensetzung, enthaltend :

(A) 100 Teile eines Gemisches aus :

($A_1$) 95 bis 30 Teilen eines Polymeren, ausgewählt unter den Ethylen-Propylen-Dien-Terpolymeren und einem Ethylen-Propylen-Copolymeren,

($A_2$) 5 bis 70 Teilen eines Diorganopolysiloxangummis der Viskosität mindestens $10^6$ mPa.s bei 25°C,

(B) 0,5 bis 10 Teile eines Produkts der Formel :

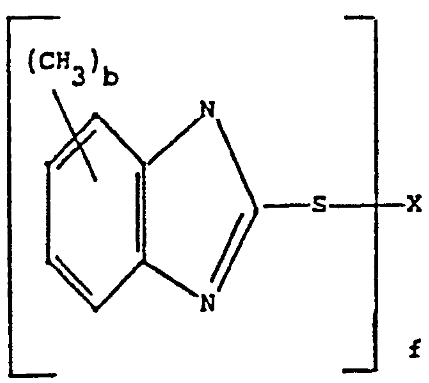

(1)

worin b = 0 oder 1, X ausgewählt ist unter einem Metallkation und dem Wasserstoffatom, f eine ganze Zahl zwischen 1 und einschließlich 3 ist und gleich der Zahl der positiven, von dem Kation getragenen Ladungen ist und f = 1, wenn X ein Wasserstoffatom ist,

(C) 0,1 bis 10 Teile einer aromatischen Verbindung mit sek.-Aminfunktion,

(D) 5 bis 200 Teile eines mineralischen Füllstoffs,

(E) 0,1 bis 30 Teile eines Diorganopolysiloxanöls der Viskosität zwischen 10 und 5000 mPa.s bei 25°C, dessen organische Reste ausgewählt sind unter den Resten Methyl, Vinyl, Phenyl und 3,3,3-Trifluorpropyl, wobei mindestens 50 Mol-% der organischen Reste Methylreste sind,

(F) 0,1 bis 7 Teile eines organischen Peroxids.

2. Zusammensetzung gemäß Anspruch 1, dadurch gekennzeichnet, daß (C) ausgewählt ist unter 2,2,4-Trimethyl-1,2-dihydrochinolin, das mindestens zum Teil polymerisiert ist, und den para-Phenylendiaminen.

3. Zusammensetzung gemäß Anspruch 1, dadurch gekennzeichnet, daß in der Formel (1) des Produkts B, X das Zink ist und f = 2.

4. Zusammensetzung gemäß einem der vorhergehenden Ansprüche, dadurch gekennzeichnet, daß das Öl (E) der allgemeinen Formel

$$R^3_{3-g}(HO)_gSiO(R_2^3SiO)_mSi(OH)_gR^3_{3-g}$$

entspricht, worin die Reste $R^3$, die identisch oder verschieden sind, ausgewählt sind unter den Resten Methyl, Vinyl, Phenyl und 3,3,3-Trifluorpropyl, g ist 0 oder 1 und m ist eine ganze Zahl mit einem ausreichenden Wert, um dem Polymeren (E) eine Viskosität zwischen 10 und 5000 mPa.s bei 25°C zu verleihen.

5. Zusammensetzung gemäß Anspruch 4, dadurch gekennzeichnet, daß die Reste $R^3$ ausgewählt sind

unter den Methyl- und Phenylresten.

6. Zusammensetzung gemäß einem der vorhergehenden Ansprüche, dadurch gekennzeichnet, daß sie außerdem pro 100 Teile des Gemisches (A) von 0,05 bis 5, vorzugsweise von 0,1 bis 2 Teile eines Silans (G) der Formel

$$(CH_2 = CH)Si(CH_3)_c(X)_{3-c} \quad (4)$$

enthält, worin X ausgewählt ist unter den Resten Methoxy, Ethoxy, 2-Methoxyethoxy und 2-Ethoxyethoxy, c ist 1 oder 0.

7. Zusammensetzung gemäß einem der vorhergehenden Ansprüche, dadurch gekennzeichnet, daß sie außerdem pro 100 Teile des Gemisches (A) von 0,05 bis 5, vorzugsweise von 0,1 bis 2 Teile eines Silans (H) der Formel

$$CH_2 = C(R^4)COO(CH_2)_dSi(Y)_e(X)_{3-e} \quad (5)$$

enthält, worin $R^4$ = H oder Methyl, d eine ganze Zahl zwischen 1 und einschließlich 5 ist, Y ein Methyl oder ein Phenyl ist, X die bei der obigen Formel (4) angegebene Definition hat und e = 1 oder 0.

8. Zusammensetzung gemäß einem der Ansprüche 1 bis 7, dadurch gekennzeichnet, daß der Füllstoff (D) ausgewählt ist unter den Pyrogenen und Fällungssiliciumdioxiden bzw. -kieselsäuren.

9. Verfahren zur Herstellung einer Zusammensetzung, wie sie in einem der Ansprüche 1 bis 8 definiert ist, wonach man getrennt einerseits eine erste Mutttermischung herstellt, indem ($A_1$) zu mindestens einem Teil von (D) gemischt wird, und andererseits eine zweite Muttermischung herstellt, indem ($A_2$), der Rest der Füllstoffe (D) und (E) und gegebenenfalls (G) und (H) vermischt werden, dann die beiden Muttermischungen homogenisiert, indem (B) und (C) und zum Schluß (F) zugegeben werden.

## Claims

1. Rubber composition comprising :

(A) 100 parts of a mixture of :

($A_1$) 95 to 30 parts of a polymer chosen from an ethylene-propylene-diene terpolymer and an ethylene-propylene copolymer, and

($A_2$) 5 to 70 parts of a diorganopolysiloxane gum having a viscosity of at least $10^6$ mPa.s at 25°C,

(B) 0.5 to 10 parts of a product of formula :

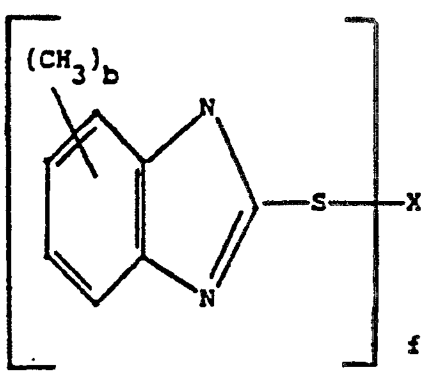

(1)

in which b = 0 or 1, X is chosen from a metal cation and a hydrogen atom and f is an integer between 1 and 3 inclusive and is equal of the number of positive charges carried by the cation, and f = 1 if X is a hydrogen atom,

(C) 0.1 to 10 parts of an aromatic compound containing a secondary amine function,

(D) 5 to 200 parts of an inorganic filler,

(E) 0.1 to 30 parts of a diorganopolysiloxane oil having a viscosity of between 10 and 5000 mPa.s at 25°C,

the organic radicals of which are chosen from the methyl, vinyl, phenyl and 3,3,3-trifluoropropyl radicals, at least 50 molar % of the organic radicals being methyl radicals, and

(F) 0.1 to 7 parts of an organic peroxide.

2. Composition according to claim 1, characterised in that (C) is chosen from 2,2,4-trimethyl-1,2-dihydroquinoline which is at least partially polymerised and the para-phenylenediamines.

3. Composition according to claim 1, characterised in that, in the formula (1), of product B, X is zinc and f = 2.

4. Composition according to any one of the preceding claims, characterised in that the oil (E) has the general formula :

$$R^3_{3-g}(HO)_gSiO(R_2^3SiO)_mSi(OH)_gR^3_{3-g}$$

in which the radicals $R^3$, which may be identical or different, are chosen from the methyl, vinyl, phenyl and 3,3,3-trifluoropropyl radicals, g is 0 or 1 and m is an integer having a value sufficient to impart a viscosity of between 10 and 5000 mPa.s at 25°C to the polymer (E).

5. Composition according to claim 4, characterised in that the radicals $R^3$ are chosen from the methyl and phenyl radicals.

6. Composition according to any one of the preceding claims, characterised in that it also comprises, per 100 parts of mixture (A), from 0.05 to 5, preferably from 0.1 to 2, parts of a silane (G) of formula :

$$(CH_2 = CH)Si(CH_3)_c(X)_{3-c} \quad (4)$$

in which X is chosen from the methoxy, ethoxy ; 2-methoxyethoxy and 2-ethoxyethoxy radicals and c is 1 or 0.

7. Composition according to any one of the preceding claims, characterised in that it also comprises, per 100 parts of mixture (A), from 0.05 to 5, preferably from 0.1 to 2, parts of a silane (H) of formula :

$$CH_2 = C(R^4)COO(CH_2)_d(Si(Y)_e(X)_{3-e}$$

in which $R^4$ is H or methyl, d is an integer between 1 and 5 inclusive, Y is a methyl or a phenyl, X has the definition given for formula (4) above and e is 1 or 0.

8. Composition according to any one of claims 1 to 7, characterised in that the filler (D) is chosen from silicas produced by combustion and by precipitation.

9. Process for the preparation of a composition as defined in any one of claims 1 to 8, according to which, on the one hand, a first master mixture is prepared by mixing ($A_1$) and at least part of (D) and, on the other hand, separately, a second master mixture is prepared by mixing ($A_2$), the remainder of the fillers (D) and (E) and optionally (G) and (H), and the two master mixtures are then homogenised adding (B) and (C) and then, finally, (F).